# EUROPÄISCHE PATENTSCHRIFT

(11) **EP 3 740 327 B1**
(45) Veröffentlichungstag und Bekanntmachung des Hinweises auf die Patenterteilung: **26.10.2022**
(21) Anmeldenummer: 19702540.6
(22) Anmeldetag: 21.01.2019
(51) Int. Cl.: B07C 5/342

(54) **VERFAHREN UND VORRICHTUNG ZUM BESTIMMEN EINER MECHANISCHEN EIGENSCHAFT EINES OBJEKTES**
METHOD AND DIVICE FOR IDENTIFYING A MECHANICAL PROPERTY OF AN OBJECT
PROCÉDÉ ET DISPOSITIF POUR IDENTIFIER UNE PROPRIÉTÉ MÉCANIQUE D'UN OBJET

(30) Priorität: 19.01.2018 DE 102018200895
(43) Veröffentlichungstag der Anmeldung: 25.11.2020
(73) Patentinhaber: Fraunhofer-Gesellschaft zur Förderung der angewandten Forschung e.V., 80686 München (DE); Karlsruher Institut für Technologie (KIT), 76131 Karlsruhe (DE)
(72) Erfinder: LÄNGLE, Thomas, 76344 Eggenstein (DE); NOACK, Beniamin, 76185 Karlsruhe (DE); PFAFF, Florian, 76229 Karlsruhe (DE); HANEBECK, Uwe, 76337 Waldbronn (DE); GRUNA, Robin, 76530 Baden-Baden (DE); MAIER, Georg, 76870 Kandel (DE)
(74) Vertreter: Pfenning, Meinig & Partner mbB
(86) Internationale Anmeldenummer: PCT/EP2019/051387
(87) Internationale Veröffentlichungsnummer: WO 2019/141847

(56) Entgegenhaltungen:
- WO-A1-2017/089145
- PFAFF FLORIAN ET AL: "TrackSort: Predictive tracking for sorting uncooperative bulk materials", 2015 IEEE INTERNATIONAL CONFERENCE ON MULTISENSOR FUSION AND INTEGRATION FOR INTELLIGENT SYSTEMS (MFI), IEEE, 14. September 2015 (2015-09-14), Seiten 7-12, XP032792704, DOI: 10.1109/MFI.2015.7295737 [gefunden am 2015-10-09] in der Anmeldung erwähnt

## Beschreibung

Die Erfindung betrifft ein Verfahren zum Bestimmen zumindest einer mechanischen Eigenschaft zumindest eines Objektes, wobei das Objekt einer Wechselwirkung unterworfen wird, die einen Bewegungszustand des Objektes beeinflusst. Das Objekt wird mit zumindest einer Kamera beobachtet und aus den von der Kamera aufgenommenen Bildern die Bewegung des Objektes bestimmt. Hieraus kann dann die zumindest eine mechanische Eigenschaft des Objektes bestimmt werden.

Systeme zur industriellen Sichtprüfung stellen eine wichtige Technologie zur Qualitätssicherung in automatisierten Produktions- und Aufbereitungsprozessen dar. Unterkategorien solcher Systeme sind optische Inspektions- und Sortiersysteme. Je nach Aufgabenstellung kommen VIS Kameras, NIR Kameras, Dual Energy-Röntgenverfahren oder andere Sensorik zum Einsatz. Für komplexe Systeme werden u.U. mehrere verschiedene Sensoren eingesetzt (Multisensor-Systeme), um ausreichende Informationen zur Charakterisierung der Materialien zu erheben. Dies ist i.d.R. mit hohen Kosten verbunden.

Die Wahl einer passenden Sensorik beschränkt das System hinsichtlich der Eigenschaften, welche für die Inspektion oder Charakterisierung der Materialien genutzt werden können. Im Falle von VIS Systemen sind dies optische Eigenschaften. Bei Röntgensystemen kann durch die partielle Dichtebestimmung eine physikalische Eigenschaft erfasst werden, jedoch sind entsprechende Systeme sehr teuer und erfordern den Einsatz umfangreicher Strahlenschutzmaßnahmen.

In einigen Fällen genügen die genannten Informationen nicht für die Bewertung oder Unterscheidung bestimmter Materialien.

Generell lassen sich Materialien durch geometrische, optische, biochemische sowie mechanisch-physikalische Eigenschaften beschreiben. Bis dato existieren jedoch keine Systeme, welche zuletzt genannte Kategorie für die Charakterisierung von Materialien nutzen können.

Nichtoptische Objekteigenschaften werden derzeit vorwiegend durch mechanische Verfahren geprüft. Vereinzelt werden auch berührungslose Verfahren eingesetzt, diese sind jedoch sehr kostenintensiv und daher oft nicht wirtschaftlich einsetzbar. Die Bestimmung und Bewertung der Dichte wird hauptsächlich im Recyclingbereich für die Trennung unterschiedlicher Kunststoffe oder Metalle angewendet. Verbreiteter sind hier vor allem Schwimm-/Sink-Verfahren. Diese Nassverfahren erfordern einen hohen anlagentechnischen Aufwand und haben den wesentlichen Nachteil, dass sie sich nicht für feuchtigkeitsempfindliche Produkte (z.B. Lebensmittel oder Pharmazeutika) eignen. Zudem wird das Flüssigkeitsbad im Rahmen der Abfallaufbereitung oft mit Schadstoffen kontaminiert, so dass dieses aufwendig entsorgt werden muss. Teilweise werden diese Nachteile bei einer Aerostromsortierung (auch Windsichtung) vermieden, bei der ein Luftstrom zur Dichtesortierung eingesetzt wird. Dieses Verfahren eignet sich jedoch nur zur Sortierung von Materialien/Objekten mit großem Dichteunterschied, z.B. zur Aussonderung von Papier in Altglas, und ist daher in der Anwendung stark begrenzt. Ebenso wird die Trägheit von Partikeln als Trennkriterium, z.B. zur Materialtrennung von Altkunststoffen, genutzt. In Trägheits- oder Fliehkraftabscheidern erfolgt eine Trennung aufgrund von Trägheitskraft. Diese sind jedoch im Durchsatz stark limitiert und eignen sich nur für relativ kleine Partikelgrößen. Zur Kontrolle des Produktgewichts bzw. der Masse werden heute automatisch Wägesysteme eingesetzt, die auch für eine Inline-Prüfung im Produktionsprozess betrieben werden können. in der Regel erlauben diese jedoch nicht die gleichzeitige Prüfung mehrerer Objekte und müssen daher für einen höheren Durchsatz parallel eingesetzt werden.

Zur Bewertung anderer nichtoptischer Objektegenschaften wie die Reibung, Steifigkeit, Rollfähigkeit oder des Strömungswiderstands existieren zwar etablierte Prüf- und Messverfahren, diese können jedoch nicht direkt prozess- und anlagentechnisch umgesetzt werden und sind daher nur für eine manuelle Offline-Inspektion einsetzbar. Beispielweise werden heute für tribologische Untersuchungen unterschiedlicher Labormessaufbauten zur Bestimmung von Reibungskoeffizienten eingesetzt. Ein Inline-Inspektionsverfahren zur automatischen Prüfung von Reibungseigenschaften im Produktionsporzess, insbesondere von Schüttgütern, existiert derzeit jedoch nicht.

Röntgen- oder Terahertztechnik stellen berührungslose Verfahren dar, mit denen Informationen über die innere Beschaffenheit von Objekten gewonnen werden können und die Rückschlüsse auf nichtoptische Eigenschaften ermöglichen. Beispielsweie kann mittels Dual Energy-Röntgenverfahren die Dichte eines Materials gemessen werden. Beide Technologien sind jedoch mit sehr hohen Anschaffungskosten verbunden. Zusätzlich müssen für den Einsatz von Röntgentechnik im Produktionsbetrieb umfangreiche Strahlenschutzmaßnahmen eingeführt und beachtet werden. Im Fall der Terahertztechnik bestehen Nachteile in der geringen Ortsauflösung (bedingt durch eine rasterdene Bildgewinnung und den genutzten Wellenlängenbereich) und die starke Absorption von Wasser, die insbesondere die Prüfung vieler Lebensmittel verhindert.

Die WO 2015/128174 A1 beschreibt den Einsatz von Kameras in der optischen Schüttgutsortierung.

Die WO 2017/089145 A1 beschreibt ein Verfahren zur Ermittlung von Materialeigenschaften mittels Geräuschauswertung.

Aufgabe der vorliegenden Erfindung ist es, eine kostengünstige Möglichkeit bereitzustellen, um zumindest eine mechanische Eigenschaft zumindest eines Objektes bestimmen zu können. Insbesondere sollen auch solche Eigenschaften des Objektes bestimmbar sein, die nicht optisch erkennbar sind.

Die Aufgabe wird gelöst durch das Verfahren zum Bestimmen zumindest einer mechanischen Eigenschaft zumindest eines Objektes nach Anspruch 1, und die Vorrichtung zur Bestimmung zumindest einer mechanischen Eigenschaft eines Objektes nach Anspruch 18.

Die abhängigen Ansprüche geben vorteilhafte Weiterbildungen des erfindungsgemäßen Verfahrens an.

Erfindungsgemäß wird ein Verfahren bereitgestellt, mit dem zumindest eine mechanische Eigenschaft zumindest eines Objektes bestimmbar ist. Unter mechanischen Eigenschaften werden dabei vorzugsweise solche Eigenschaften verstanden, die Einfluss auf die Bewegung des Objektes unter dem Einfluss zumindest einer Wechselwirkung haben. Vorteilhaft eignet sich das erfindungsgemäße Verfahren insbesondere zum Bestimmen von Eigenschaften, die nicht optisch erkennbar sind.

Erfindungsgemäß wird das zumindest eine Objekt zumindest einer Wechselwirkung unterworfen, wobei die zumindest eine Wechselwirkung einen Bewegungszustand des zumindest einen Objektes beeinflusst. Im Normalfall wird daher die zumindest eine Wechselwirkung eine Kraft auf das zumindest eine Objekt ausüben. Die Beeinflussung des Bewegungszustands kann eine Änderung des Bewegungszustandes bedeuten. Die Beeinflussung kann aber auch zur Ausbildung eines Kräftegleichgewichts führen, in dem der Bewegungszustand des Objektes konstant ist. Beispiel hierfür ist ein Driften des Objektes in einem viskosen Medium, wo sich ein Kräftegleichgewicht zwischen einer das Objekt bewegenden Kraft und einer Reibungskraft auf das Objekt ausbilden. Ein anderes Beispiel ist das Halten des Objektes mittels der zumindest einen Wechselwirkung im Schwerefeld, wo sich das Objekt konstant nicht bewegt.

Vorzugsweise wird die zumindest eine Wechselwirkung so gewählt, dass der durch die Wechselwirkung beeinflusste Bewegungszustand eine Funktion der zumindest einen mechanischen Eigenschaft ist, die bestimmt werden soll. Soll die Wechselwirkung eine Änderung des Bewegungszustandes des zumindest einen Objektes bewirken, also zum Beispiel eine Beschleunigung des Objektes, so kann die Wechselwirkung vorteilhaft so gewählt werden, dass die durch die Wechselwirkung bewirkte Änderung des Bewegungszustandes eine Funktion der zumindest einen mechanischen Eigenschaft ist. Soll die Wechselwirkung den Bewegungszustand des Objektes nicht verändern, so wird vorteilhafterweise die Wechselwirkung so gewählt, dass sie den sich nicht verändernden Bewegungszustand des Objektes beeinflusst, was bedeutet, dass der sich einstellende Bewegungszustand ein anderer wäre, wenn die Wechselwirkung anders wäre. Allgemein gesprochen wird das Objekt vorzugsweise zumindest einer Wechselwirkung unterworfen, so dass eine Änderung dieser Wechselwirkung, insbesondere eine Änderung eines Wertes oder Betrages dieser Wechselwirkung zu einer Änderung eines Bewegungszustandes des Objektes führt oder diese zur Folge hat. Dabei kann dann die Wechselwirkung so gewählt sein, dass die Änderung des Bewegungszustandes des Objektes infolge einer Änderung der Wechselwirkung eine Funktion der zumindest einen mechanischen Eigenschaft ist, die bestimmt werden soll.

Erfindungsgemäß wird das zumindest eine Objekt mit zumindest einer Kamera beobachtet, während die Wechselwirkung auf das Objekt wirkt. Dabei soll das Objekt zumindest zu jenen Zeiten mit der Kamera beobachtet werden, zu denen die Wechselwirkung den Bewegungszustand des Objektes beeinflusst.

Es wird dann aus den von der zumindest einen Kamera aufgenommenen Bildern eine Bewegung des Objektes bestimmt. Es sei darauf hingewiesen, dass die so beobachtete Bewegung auch ein Stillstehen des Objektes sein kann, beispielsweise wenn die Wechselwirkung zu einem unbewegten Gleichgewichtszustand führt.

Aus der so bestimmten Bewegung des zumindest einen Objektes kann dann die zumindest eine mechanische Eigenschaft des Objektes bestimmt werden. In diese Bestimmung geht vorteilhafterweise neben der beobachteten Bewegung eine Kenntnis der zumindest einen Wechselwirkung ein. Es können auch weitere Parameter eingehen, die unter anderem auch optisch bestimmbar sein können, wie beispielsweise eine Ausdehnung oder ein Volumen des Objektes. Es ist möglich aber nicht erforderlich, dass die zumindest eine mechanische Eigenschaft des Objektes aus der beobachteten Bewegung berechnet wird. Auch eine Bestimmung mittels Maschinenlernverfahren ist von der Erfindung umfasst.

Vorteilhafterweise kann aus den von der Kamera aufgenommenen Bildern zumindest ein Ort des Objektes zu einem bestimmten Zeitpunkt, zumindest eine Trajektorie des Objektes, zumindest eine Geschwindigkeit und/oder zumindest eine Beschleunigung des Objektes bestimmt werden. Vorteilhafterweise werden durch die Kamera mehrere Bilder aufgenommen, die in die Bestimmung des Bewegungszustands eingehen. Es sind aber auch Szenarien denkbar, in denen der Bewegungszustand mit nur einem Bild bestimmbar ist. Wird beispielsweise das Objekt in einem inhomogenen Kraftfeld gegenüber dem Gravitationsfeld der Erde gehalten, so kann beispielsweise die Masse des Objektes den Ort des Haltens beeinflussen, weil dies gerade der Ort ist, an dem die durch die Masse bestimmte Gewichtskraft des Objektes mit der durch das inhomogene Kraftfeld ausgeübten Gegenkraft übereinstimmt. In diesem Fall kann daher als mechanische Eigenschaft die Masse des Objektes aus nur einem Bild bestimmt werden. Vorteilhafterweise werden aber zumindest zwei Bilder von der Kamera aufgenommen.

Bevorzugterweise wird das Objekt mehrmals zu unterschiedlichen Zeiten von der zumindest einen Kamera aufgenommen. Auf diese Weise kann eine Veränderung des Ortes des Objektes bestimmt werden, woraus der Bewegungszustand bestimmbar ist.

Vorteilhafterweise kann das Objekt auch mit zumindest zwei Kameras aus unterschiedlichen Richtungen aufgenommen werden. Auf diese Weise kann der Bewegungszustand zumindest eines Objektes bestimmt werden, das sich nicht genau parallel zur Bildebene einer Kamera bewegen. Dies ist insbesondere vorteilhaft in Szenarien, wo mechanische Eigenschaften einer Mehrzahl von Objektes gleichzeitig bestimmt werden sollen, die sich nicht alle parallel zueinander bewegen.

Es ist auch vorteilhaft möglich, das zumindest eine Objekt mit einer ersten Kamera zu einem ersten Zeitpunkt zu beobachten und mit einer zweiten Kamera zu einem zweiten, vom ersten verschiedenen, Zeitpunkt zu beobachten. Auf diese Weise ist die Bestimmung des Bewegungszustandes nicht auf den Sichtbereich einer Kamera beschränkt.

In einer vorteilhaften Ausgestaltung der Erfindung kann als Bewegungszustand des zumindest einen Objektes eine Menge von Größen bestimmt werden, die eine oder mehrere der folgenden Größen enthalten: Eine Anzahl von aus den Bildern ermittelten Werten, eine Durchschnittsgeschwindigkeit des jeweiligen Objektes, gemittelt über eine maximale Zeitdauer, die das Objekt in den aufgenommenen Bildern sichtbar ist, eine minimale Geschwindigkeit innerhalb der Zeitdauer, die das Objekt in den aufgenommenen Bildern sichtbar ist, eine maximale Geschwindigkeit in der Zeitdauer, in der das Objekt in den aufgenommenen Bildern sichtbar ist, eine Durchschnittsgeschwindigkeit über einen Teil oder den gesamten Zeitraum, in dem das jeweilige Objekt in den aufgenommenen Bildern sichtbar ist, eine Durchschnittsbeschleunigung des jeweiligen Objektes, gemittelt über eine maximale Zeitdauer, die das Objekt in den aufgenommenen Bildern ist, eine minimale Beschleunigung innerhalb der Zeitdauer, die das jeweilige Objekt in den aufgenommenen Bildern sichtbar ist, eine maximale Beschleunigung innerhalb der Zeitdauer, die das jeweilige Objekt in den aufgenommenen Bildern sichtbar ist, und/oder eine Durchschnittsbeschleunigung über einen Teil des Zeitraums, in dem das jeweilige Objekt in den aufgenommenen Bildern sichtbar ist.

Als Wechselwirkung kommen vorzugsweise vor allem solche Wechselwirkungen infrage, die zumindest eine Kraft auf das Objekt ausüben. Vorteilhafterweise kann die Wechselwirkung beispielsweise eine Beaufschlagung mit Vibration, eine Beaufschlagung mit zumindest einem Stoß, eine Wechselwirkung mit einer Berührungsfläche und/oder eine Wechselwirkung mit einem Luftstrom sein oder umfassen. Auch eine Wechselwirkung mit anderen Kräften wie beispielsweise mit einem elektrischen Feld und/oder einem magnetischen Feld sind möglich, wobei hier vorzugsweise eine Ladung des Objektes bekannt ist. Auch eine Bewegung des Objektes in einem Flüssigkeitsstrom ist möglich, wo das Objekt mit einer Reibungskraft als der Wechselwirkung beaufschlagt wird.

Die Beaufschlagung mit Vibration kann beispielsweise mittels eines Rütteltisches erfolgen. Andere Wechselwirkungen können beispielsweise dadurch ausgeübt werden, dass das Objekt auf einer Rutsche rutscht. Die Rutsche kann dabei auch als Buckelrutsche, als sandgestrahlte, oder gebürstete oder beschichtete Rutsche ausgestaltet sein. Das Objekt kann zur Beaufschlagung mit der Wechselwirkung auch mit einem Förderband bewegt werden.

Mechanische Eigenschaften, die mit dem erfindungsgemäßen Verfahren bestimmbar sind, können insbesondere alle Eigenschaften des Objektes sein, die einen Einfluss auf einen Bewegungszustand des Objektes haben können. Dies können beispielsweise eine Masse des Objektes, eine Dichte des Objektes, eine Reibung des Objektes mit einem umgebenden Medium wie beispielsweise einem Gas, Luft oder einer Flüssigkeit, eine Rollfähigkeit des Objektes, eine Haftfähigkeit des Objektes, eine Steifigkeit, ein Elastizitätsmodul, eine Stoßzahl und/oder eine Strömungswiderstand des Objektes sein. Diese Liste ist nicht als beschränkend zu verstehen, sondern gibt lediglich solche mechanische Eigenschaften an, in denen das Verfahren besonders vorteilhaft ausführbar ist.

Erfindungsgemäß wird das zumindest eine Objekt mit zumindest einer Kamera beobachtet und aus von der Kamera aufgenommenen Bildern der Bewegungszustand bestimmt. Vorteilhafterweise können die Bilder hierbei einer Bildkorrektur, einer Segmentierung, einer Lokalisierung und/oder einer Merkmalsberechnung unterworfen werden.

Das erfindungsgemäße Verfahren ist besonders vorteilhaft anwendbar auf die Bestimmung mechanischer Eigenschaften einer Vielzahl von Objekten. Das Verfahren erlaubt vorzugsweise die mechanischen Eigenschaften mehrerer dieser Objekte gemeinsam zu bestimmen. Dabei können vorteilhaft mehrere der Objekte gleichzeitig von der zumindest einen Kamera beobachtet werden, so dass auch der Bewegungszustand mehrerer der Objekte zu gleichen Zeiten bestimmbar sein kann.

Vorteilhafterweise werden zumindest einige der zumindest einen Objekte in unterschiedlichen von der Kamera aufgenommenen Bildern identifiziert und getrackt bzw. verfolgt. Eine solche Verfolgung kann beispielsweise mittels Multiobject Trackings und/oder mittels "Extended Object Trackings" erfolgen. Wird das Verfahren nur auf ein Objekt gleichzeitig angewandt, so ist das Tracking des Objektes dennoch vorteilhaft, um es in unterschiedlichen Bildern identifizieren zu können. Die genannten Tracking-Verfahren erlauben jedoch auch das gleichzeitige Tracken einer Mehrzahl von Objekten und insbesondere die Zuordnung bzw. Identifizierung der einzelnen Objekte in unterschiedlichen Bildern, so dass auch über mehrere Bilder hinweg die Bewegungszustände mehrerer Objekte parallel bestimmt werden können.

In einer vorteilhaften Ausgestaltung der Erfindung kann die zumindest eine mechanische Eigenschaft aus den von der zumindest einen Kamera aufgenommenen Bildern mittels eines neuronalen Netzes bzw. mittels maschinellen Lernens ermittelt werden. Hierbei kann das neuronale Netz vorab mit einem oder mehreren Objekten mit bekannten Werten der zu bestimmenden mechanischen Eigenschaft angelernt werden. Dabei wird das oder die Objekte mit den bekannten Werten der mechanischen Eigenschaft jener Wechselwirkung unterworfen, der die Objekte später beim Bestimmen der mechanischen Eigenschaften unterworfen werden und die Objekte dabei mit der zumindest einen Kamera beobachtet. Dem neuronalen Netz können dann diese Bilder vorgegeben werden und mit den bekannten mechanischen Eigenschaften verknüpft werden.

Werden nun in einem identisch aufgebauten Umfeld Bilder von Objekten mit unbekannten Werten mit mechanischen Eigenschaft aufgenommen, so kann das neuronale Netz diese Bilder Werten der mechanischen Eigenschaft zuordnen. Auf diese Weise kann das neuronale Netz die Werte des zumindest einen mechanischen Eigenschaft für die Objekte mit unbekannten Werten der mechanischen Eigenschaft aus den von der Kamera aufgenommenen Bildern bestimmen.

In einer vorteilhaften Ausgestaltung der Erfindung können die Bewegungen der Objekte durch eine Liste von Schwerpunktmessungen beschrieben werden.

Wird das erfindungsgemäße Verfahren für eine Vielzahl von Objekten ausgeführt, so können die Objekte anhand der zumindest einen mechanischen Eigenschaft klassifiziert werden. Es können also Objekte mit gleichen oder hinreichend nahe beieinanderliegenden Werten der zumindest einen mechanischen Eigenschaft jeweils gleichen Fraktionen zugeordnet werden. Insbesondere kann vorteilhaft dem erfindungsgemäßen Verfahren dann ein Sortierschritt nachgeschaltet werden, in dem die Objekte, die unterschiedlichen Fraktionen zuzuordnen sind, unterschiedlichen Orten zugeführt werden.

Vorteilhafterweise kann das erfindungsgemäße Verfahren um Bestimmungen zumindest einer geometrischen Eigenschaft des zumindest einen Objektes ergänzt werden. Erlaubt beispielsweise die Beobachtung des Bewegungszustandes die Bestimmung der Masse des zumindest einen Objektes, so kann bei zusätzlicher Bestimmung beispielsweise eines Durchmessers des Objektes auf eine Dichte des Objektes geschlossen werden. Vorteilhafterweise kann die zumindest eine geometrische Eigenschaft in den von der Kamera aufgenommenen Bildern bestimmt werden.

Vorteilhafterweise kann das Erfindungsgemäße Verfahren zum Messen und/oder Klassifizieren dienen, vorzugsweise in einem industriellen Inspektions- und/oder Prüfsystem. Das Verfahren kann insbesondere vorteilhaft für eine In-Line-Prüfung verwendet werden. Das Verfahren kann dabei eine hundertprozentige Prüfung des zu prüfenden Materials bewirken, d.h. dass jedes Objekt geprüft wird. Dadurch kann das erfindungsgemäße Verfahren einen deutlichen Vorteil gegenüber herkömmlichen Verfahren bewirken, die nur eine stichprobenhafte Überprüfung ermöglichen. Das erfindungsgemäße Verfahren kann daher besonders vorteilhaft Teil eines Fertigungsverfahrens sein.

Vorteilhaft kann das erfindungsgemäße Verfahren unter anderem zur Schüttgutsortierung, z.B. im Recycling und/oder zur Schüttgutprüfung, z.B. zur Prüfung von Halbzeugen, eingesetzt werden.

Im Folgenden soll die Erfindung anhand einiger Figuren beispielhaft erläutert werden. Gleiche Bezugszeichen kennzeichnen dabei gleiche oder entsprechende Merkmale. Die in den Beispielen gezeigten Merkmale können auch unabhängig vom konkreten Beispiel realisiert sein und zwischen unterschiedlichen Beispielen kombiniert werden.

Es zeigt:
- Figur 1: ein Flussdiagramm eines beispielhaften Ablaufs eines erfindungsgemäßen Verfahrens,
- Figur 2: eine schematische Darstellung eines beispielhaften Ablaufs eines erfindungsgemäßen Verfahrens,
- Figur 3: eine beispielhafte Ausführung des erfindungsgemäßen Verfahrens zur Schüttgutsortierung,
- Figur 4: ein Ausführungsbeispiel der Erfindung zur Sortierung von Plastemischungen für Recycling-Anwendungen,
- Figur 5: eine beispielhafte Ausführungsform des erfindungsgemäßen Verfahrens zur Erkennung von Lufteinschlüssen in Formteilen,
- Figur 6: eine beispielhafte Ausführungsform des erfindungsgemäßen Verfahrens mit einer Vielzahl von Wechselwirkungen,
- Figur 7: eine Performanz eines beispielshaften erfindungsgemäßen Verfahrens und
- Figur 8: eine Darstellung der Genauigkeit dieses Beispiels des erfindungsgemäßen Verfahrens.

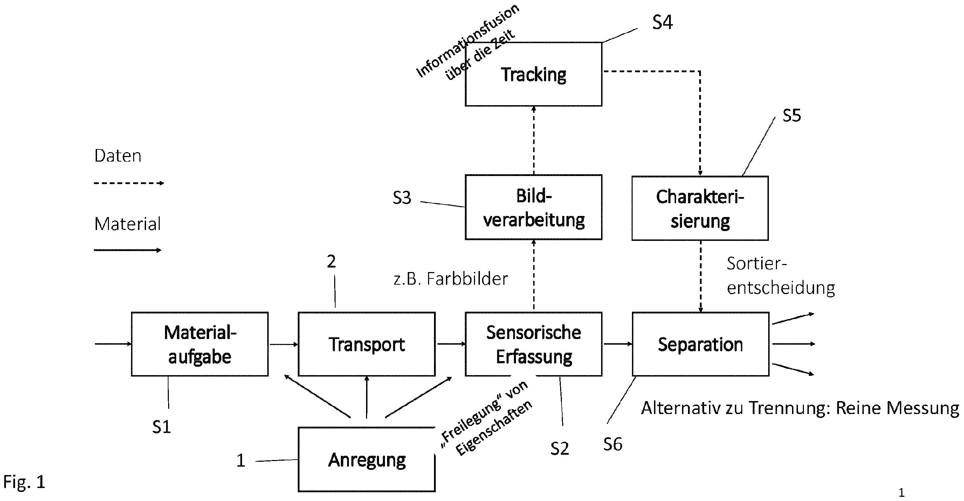

Figur 1 zeigt ein Ablaufdiagramm einer beispielhaften Ausführungsform eines erfindungsgemäßen Verfahrens zum Bestimmen zumindest einer mechanischen Eigenschaft zumindest eines Objektes. Es wird dabei in einem Schritt S1 zunächst zumindest ein Objekt an einer Wechselwirkung 1 vorbei transportiert 2. Im Schritt 2 wird das zumindest eine Objekt der zumindest einen Wechselwirkung 1 unterworfen, wobei die Wechselwirkung 1 einen Bewegungszustand des zumindest einen Objektes beeinflusst. Die Wechselwirkung 1 ist dabei so gewählt, dass der durch die Wechselwirkung beeinflusste Bewegungszustand eine Funktion der zumindest einen mechanischen Eigenschaft ist, die bestimmt werden soll. Es wird in einem Schritt S2 das zumindest eine Objekt mit zumindest einer Kamera beobachtet, deren Bilder in einem Schritt S3 einer Bildverarbeitung unterworfen werden. Das zumindest eine Objekt wird in einem Schritt S4 in den Bildern der Kamera getrackt bzw. verfolgt, so dass ein Bewegungszustand des zumindest einen Objektes bestimmbar ist. In einem Schritt S5 wird dann aus dem so bestimmten Bewegungszustand zumindest eine mechanische Eigenschaft des zumindest einen Objektes bestimmt. In einem nachgelagerten Schritt S6 können die Objekt mit unterschiedlichen Eigenschaften unter Zuhilfenahme der in S2 bestimmten Kamerabilder separiert und unterschiedlichen Fraktionen zugeführt werden.

Die Anregung 1 kann vorzugsweise eine Wechselwirkung sein, die eine Änderung des Bewegungszustandes des zumindest einen Objektes bewirkt. In der sensorischen Erfassung S2 können vorteilhaft als Bewegungszustand des zumindest einen Objektes ein Ort, eine Trajektorie, eine Geschwindigkeit und/oder eine Beschleunigung des entsprechenden Objektes bestimmt werden, die auch als Durchschnittsgeschwindigkeiten oder Durchschnittsbeschleunigungen, maximale Geschwindigkeiten, minimale Geschwindigkeiten, maximale Beschleunigungen und/oder minimale Beschleunigungen innerhalb der Beobachtungszeiträume bestimmt werden können.

Die sensorische Erfassung in Schritt S2 kann mittels einer aber auch mittels mehrerer Kameras zum gleichen oder zu unterschiedlichen Zeitpunkten erfolgen.

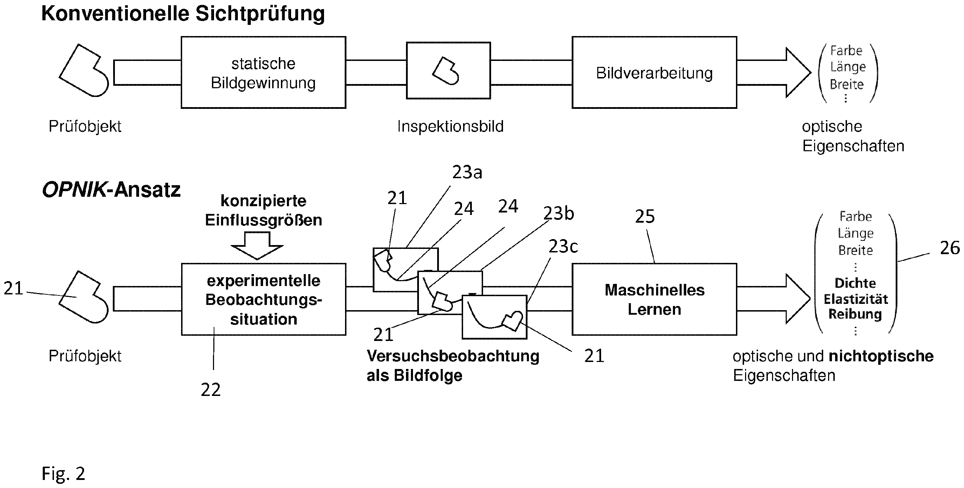

Figur 2 zeigt schematisch einen beispielhaften Ablauf des erfindungsgemäßen Verfahrens im Vergleich zu einem konventionellen Verfahren. In der oberen Hälfte ist dabei das konventionelle Verfahren gezeigt und in der unteren Hälfte ein Verfahren gemäß der vorliegenden Erfindung. Es wird ausgegangen von einem Prüfobjekt 21, das einer experimentellen Beobachtungssituation 22 unterworfen wird. Hierbei erfolgt insbesondere eine Beaufschlagung mittels einer Wechselwirkung, die einen Bewegungszustand des zumindest einen Objektes 21 beeinflusst. Von der Beobachtungssituation werden eine Mehrzahl von Bildern 23a, 23b, 23c aufgenommen, die die Bewegung des Objektes 21 abbilden. Aus diesen Bildern kann eine Trajektorie 24 des Objektes ermittelt werden. Die so ermittelten Bilder können zum Anlernen eines neuronalen Netzes 25 verwendet werden, wenn die mechanische Eigenschaft des Objektes 21 bekannt ist. Im anschließenden Ermittlungsschritt können dann Bilder 23a, 23b, 23c und/oder ermittelte Trajektorien 24 einem angelernten neuronalen Netz 25 zugeführt werden, woraus dieses zumindest eine mechanische Eigenschaft bestimmen kann. Die zumindest eine mechanische Eigenschaft 26 kann beispielsweise eine Dichte, Elastizität oder Reibung des Objektes an einem Medium sein.

In den folgenden Beispielen kann ein Anregen und Interaktion zum Beispiel erfolgen mit einem Rütteltisch, einem Luftstrom, einer Kollision mit Hindernissen (z.B. "Buckelrutsche", Abprallplatte), mit einer Oberfläche (z.B. Rutsche sandgestrahlt, gebürstet, beschichtet, ....), mit einem Förderband etc.

Eine Bildverarbeitung kann z.B. Vorverarbeitung / Bildkorrektur (Shading, Filterung), Segmentierung (Farb LUT, Thesholding), Lokalisierung (Zusammenhangsanalyse), Merkmalsberechnung (Fläche, Schwerpunkt, Länge, Breite, Farbhistogramm, Textur, Ausdehnung, ...) umfassen. Ein Tracking kann zum Beispiel basierend auf Schwerpunkten (vgl. Multiobject Tracking) und/oder basierend auf Ausdehnung (vgl. Extended Objekt Tracking) erfolgen.

Eine Charakterisierung kann zum Beispiel eine Klassifizierung auf Basis von Zeitreihen, Sequential Learning, Rekurrenten (tiefe) künstliche neuronale Netzen, Hidden Markov Modellen, Fourier-Transformationen, Dynamic Time Warping, etc. sein.

Eine Charakterisierung kann beispielsweise wie folgt erfolgen:
- Aufnahme einer Bildfolge Bt (x,y)
- Segmentierung der Bilder (Objekte / Hintergrund): Bt (x,y) € [0,...,255] → Ft (x,y) € [0,1]
- Erkennen von Objekten durch Zusammenhangsanalyse in Fₜ. Jedes Bild enthält n Objekte.
- Ein Objekt wird zu mehreren Zeitpunkten t beobachtet.
- Jede Beobachtung eines Objekts wird durch einen Merkmalsvektor ft beschrieben.
- fₜ enthält u.a. Information zur Position des Objekts. Über die Zeitreihe an Positionen kann die Trajektorie des Objekts nachvollzogen werden.
- Für die finale Charakterisierung können Methoden des maschinellen Lernens zum Einsatz kommen, welche mit Zeitreihen (variabler Länge) arbeiten.

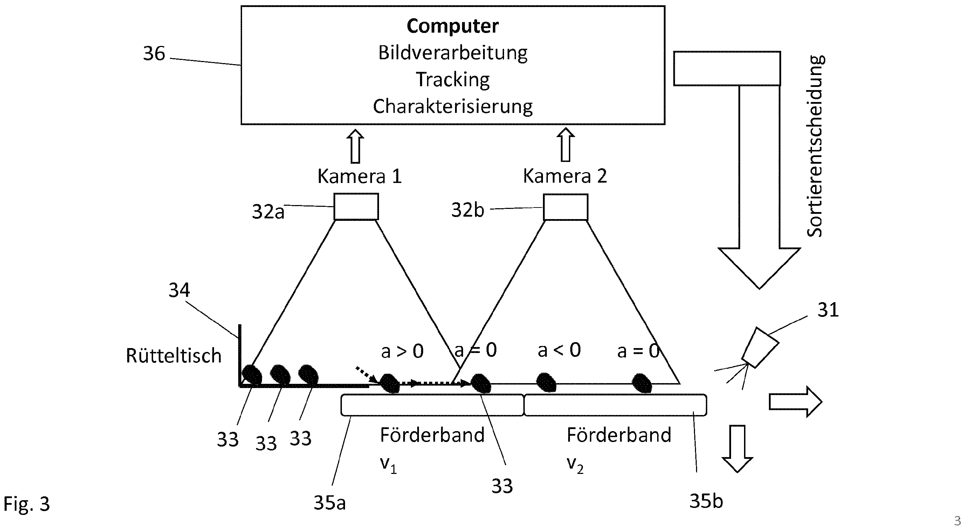

Figur 3 zeigt eine beispielhafte Ausgestaltung des erfindungsgemäßen Verfahrens zur Schüttgutsortierung. Beispielsweise können hier leere Walnussschalen zwischen Nüssen entdeckt werden. Leere Schalen können aus einem Materialstrom über Druckluftventile 31 ausgeschleust werden. Es werden hierbei Objekte 33, die das Schüttgut bilden, auf einem Rütteltisch 34 im Sichtbereich einer ersten Kamera 32a gerüttelt, so dass sie sich auf ein erstes Förderband 35a begeben, das mit einer ersten Geschwindigkeit v₁ fördert. Die Kamera 32a nimmt Bilder des Schüttguts im Bereich des Rütteltisches 34 und des Förderbandes 35a auf und gibt diese einer Verarbeitungselektronik 36 weiter, das eine Bildverarbeitung, Tracking und Charakterisierung ausführen kann. Die Objekte des Schüttguts 33 erfahren beim Übergang vom Rütteltisch 34 zum ersten Förderband 35a eine Beschleunigung, die in den Bildern der ersten Kamera 32a bestimmbar ist. Während der Förderung auf dem ersten Förderband 35a bewegen sich die Objekte des Schüttguts 33 mit konstanter Geschwindigkeit. Die Objekte 33 werden dann im Sichtbereich einer zweiten Kamera 32b auf ein zweites Förderband 35b übergeben, das sich mit einer zweiten Geschwindigkeit v₂ bewegt, die kleiner ist als die Geschwindigkeit v₁. Die Objekte 33 erfahren daher beim Übergang auf das zweite Förderband 35b eine Entschleunigung, die in von der zweiten Kamera 32b aufgenommenen Bildern beobachtbar ist. Die zweite Kamera 32b liefert ihre Bilder an die Auswerteelektronik 36, die insbesondere die durch die erste Kamera 32a aufgenommenen Objekte den durch die zweite Kamera 32b aufgenommenen Objekte mittels Trackings zuordnen kann. Die Verarbeitungselektronik 36 kann aufgrund der so ermittelten mechanischen Eigenschaften der Objekte 33 entscheiden, ob es sich um Nüsse oder leere Schalen handelt. Die Verarbeitungselektronik 36 kann dann die Luftdruckdüse 31 so steuern, dass diese die leeren Schalen einer anderen Fraktion zuführt als Nüsse.

Als mechanische Eigenschaften, anhand derer die leeren Schalen erkennbar sind, eignen sich hier besonders die Masse und Trägheit der Objekte 33, die in den genannten Beschleunigungen und Entschleunigungen zum Ausdruck kommen. Der gezeigte Aufbau enthält daher mit den Förderbändern 35a und 35b Komponenten, die die Nüsse beschleunigen und abbremsen.

Die Kameras 32a und 32b sind vorzugsweise Hochgeschwindigkeitskameras. Der Beobachtungsbereich der ersten Kamera 32a erstreckt sich im gezeigten Beispiel über den Vibrationstisch 34 bis zum ersten Förderband 35a und der Beobachtungsbereich der zweiten Kamera 32b erstreckt sich vom Übergang zwischen den Förderbändern 35a und 35b bis zum Ende des Förderbandes 35b. Vorteilhafterweise sind die Beobachtungsbereiche der beiden Förderbänder 32a, 32b überlappend, um die Objekte 33 verfolgen zu können. Durch die Verwendung von Farbkameras 32a, 32b können bei Bedarf außerdem fleckige Stellen auf der Schale erkannt werden und als weiteres Klassifizierungskriterium verwendet werden.

Zur Detektion der einzelnen im Materialstrom enthaltenden Nüsse 33 können Bildsegmentierungsverfahren wie beispielsweise Farbhistogramme, Differenzbilder oder ähnliches eingesetzt werden. Ein Objekt kann beispielsweise auch durch ein oder mehrere geometrische Merkmale beschrieben werden, wie beispielsweise Mittelpunkt 2W-Projektion, ein umschließendes Rechteck, und/oder eine Fläche.

Zum Aufdecken der Korrespondenzen der einzelnen Objekte 33 zu unterschiedlichen Beobachtungszeitpunkten können Trackingalgorithmen verwendet werden (vgl. Multiobject Tracking, Extended Object Tracking).

Zum Einlernen der charakteristischen Sequenzen wird zunächst mit Hilfe einer Rückführung eine große Trainingsmenge für normale und separat für taube Nüsse 33 erstellt. Auf Basis dieser Daten wird der Klassifikationsalgorithmus trainiert.

Die Klassifikation der einzelnen Nüsse 33 geschieht auf Basis einer Sequenz an Beobachtungspunkten in Form einer Menge an Schwerpunkten / umschließenden Rechtecken / Flächenkoordinaten / usw. Hierfür können Algorithmen aus dem Themenfeld Sequential Learning, z.B. rekurrente neuronale Netze eingesetzt werden. Entsprechende Klassifikationsalgorithmen ermöglichen es, Entscheidungen nicht auf Basis einer einzelnen Beobachtung, sondern einer Historie abzuleiten (im Falle von RNN durch Zyklen an Neuronen). Die Historie beinhaltet in diesem Fall Information über die Bewegung der Nuss an den verschiedenen Positionen.

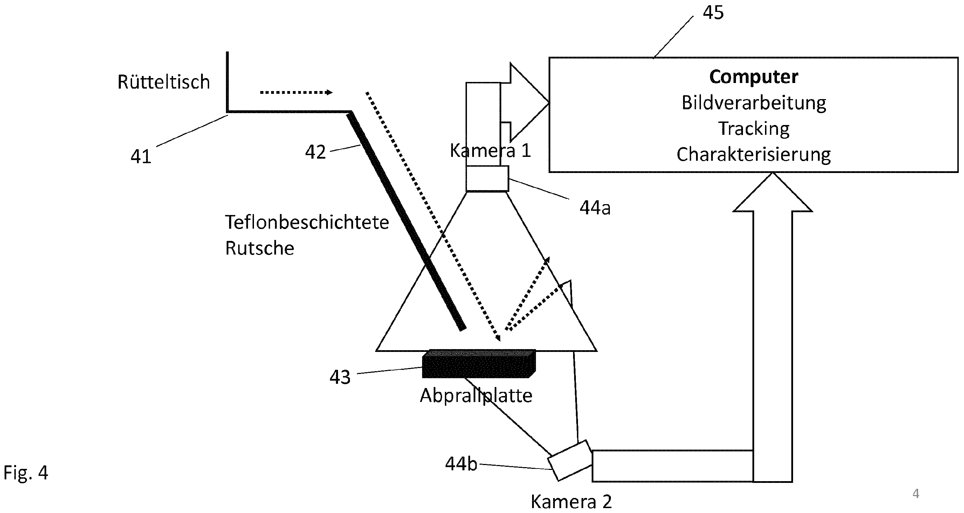

Figur 4 zeigt ein weiteres Ausführungsbeispiel eines erfindungsgemäßen Verfahrens, das zur Sortierung von Plastemischungen für Recyclinganwendungen dient. Es werden hierbei eine Vielzahl von Objekten zunächst auf einen Rütteltisch 41 aufgebracht. Dieser vibriert und bewegt dadurch die Objekte auf eine Rutsche, die beispielsweise teflonbeschichtet sein kann. Die Objekte werden dort im Schwerefeld der Erde beschleunigt und treffen am Ende der Rutsche 42 auf eine Abprallplatte 43, von der sie abprallen. Die Objekte werden im Bereich der Abprallplatte 43 mittels einer ersten Kamera 44a und einer zweiten Kamera 44b beobachtet, so dass sich ihre Bewegung nach dem Abprallen auf der Abprallplatte 43 ermitteln lässt. Eine elektronische Auswerteeinheit 45, hier ein Computer, führt eine Bildverarbeitung auf den von den Kameras 44a und 44b aufgenommenen Bildern aus und trackt die Objekte. Aufgrund der unterschiedlichen Trajektorien der Objekte nach dem Auftreffen auf die Abprallplatte 43 können die Objekte charakterisiert werden.

Die hier sortierten Objekte können beispielsweise im Rahmen eines Recyclingprozesses anfallende Mischungen von Low-Density-Polyethylen (LDPE) und High-Density-Polyethylen (HDPE) in unbekanntem Mischverhältnis sein. Die entsprechenden Anteile können mittels des gezeigten Beispiels zur Wiederverwertung bestimmt werden.

LDPE und HDPE unterscheiden sich unter anderem im Elastizitätsmodul und in ihrer Stoßzahl. Im in Figur 4 gezeigten Beispiel werden diese Objekte daher auf die Abprallplatte 43, die beispielsweise eine Stahlplatte sein kann, geführt, wo sie abprallen. Die Kameras 44a und 44b können beispielsweise monochrome Hochgeschwindigkeitsflächenkameras sein. Dabei erfasst die Kamera 44a den Vorgang aus der Vogelperspektive und die Kamera 44b von der Seite, d.h. Kamera 44b blickt im Wesentlichen in Richtung parallel zur Fläche der Abprallplatte 43. Die Bildverarbeitung und das Tracking können wie in Beispiel 1 beschrieben ausgestaltet sein.

Im in Figur 4 gezeigten Beispiel kann die Klassifizierung besonders vorteilhaft mittels Maschinenlernen realisiert werden. Zum Einlernen des Systems können Referenzkörper aus Kunststoff mit bekanntem Elastizitätsmodul bzw. bekannter Stoßzahl durch das System geschleust werden. Es können dann die Trajektorien der Objekte in den Beobachtungsbereichen der Kameras 44a und 44b erfasst werden, indem die Bilder segmentiert und die Objekte erkannt werden, wobei mittels Multi-Target-Tracking-Verfahrens zeitlich Korrespondenzen zwischen den Aufnahmen hergestellt werden können. Vorteilhaft kann als zusätzliche geometrische Eigenschaft eine Fläche des Objektes, ein Winkel der Hauptachse und/oder eine Streckung bestimmt werden. Das neuronale Netz kann auf Basis der Trajektorien sowie der genannten geometrischen Eigenschaften trainiert werden, wobei ein Modell verwendet wird, das als Zielgrößen das Elastizitätsmodul sowie die Stoßzahl des entsprechenden Objekts hat.

Nach der Einlernphase können dann die zu bewertenden Kunststoffpartikel durch das System geführt werden. Das Modell ermöglicht auf Basis der Beobachtungen durch die Kameras 44a und 44b eine Prädiktion des Elastizitätsmoduls und der Stoßzahl und ermöglicht dadurch die Bestimmung der Anteile an LDPE und HDPE.

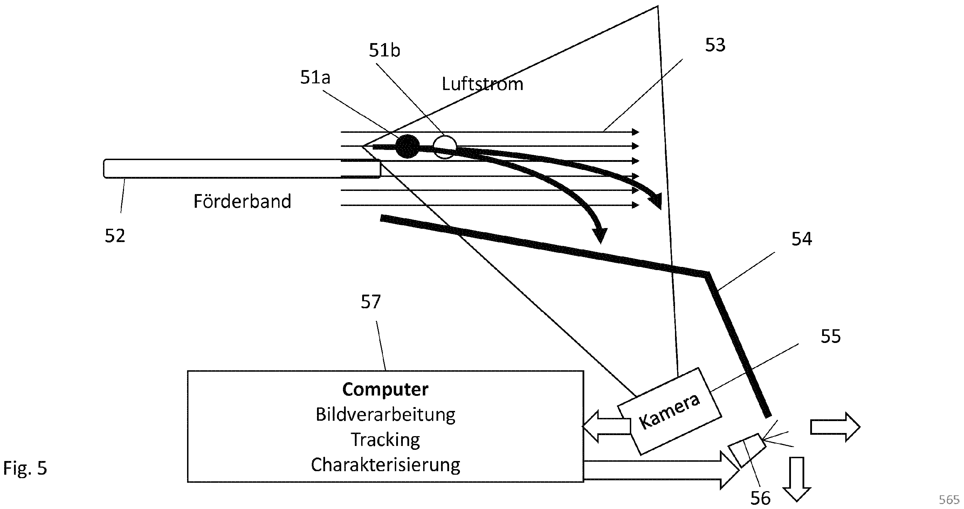

Figur 5 zeigt ein weiteres Beispiel eines erfindungsgemäßen Verfahrens, das zur Erkennung von Lufteinschlüssen in Formteilen dient. Es werden hierbei Objekte 51a und 51b auf einem Förderband 52 bewegt. Die Objekte 51a, 51b werden durch das Förderband 52 in den Einflussbereich eines Luftstroms 53 eingebracht. Im Bereich des Luftstroms 53 befinden sich die Objekte 51a und 51b im Fall. Hat eines der Objekte 51a oder 51b Lufteinschlüsse, so hat das Objekt eine geringere mittlere Dichte. Haben die Formteile 51a, 51b einheitliches Volumen, ist daher das Gewicht eines Formteils 51a, 51b mit Lufteinschlüssen geringer als ohne Lufteinschlüsse. Das entsprechende Formteil 51a senkt sich daher im Luftstrom langsamer ab in der Flugphase. Der Flug der Formteile 51a und 51b wird im gezeigten Beispiel mit einer Hochgeschwindigkeitsflächenkamera 55 beobachtet, deren Blickrichtung senkrecht zur Flugrichtung der Objekte 51a, 51b steht. Die Kamera 55 kann eine monochrome Hochgeschwindigkeitsflächenkamera sein.

Die von der Kamera 55 aufgenommenen Bilder werden einer Verarbeitungselektronik 57 zugeführt, die eine Bildverarbeitung und Tracking der Objekte ausführt. Anhand der beobachteten Trajektorien der Objekte 51a und 51b können diese charakterisiert werden, insbesondere auf das Vorhandensein von Lufteinschlüssen hin. Die Objekte 51a, 51b können nach ihrem freien Fall im Luftstrom 53 auf eine Rutsche 54 fallen, mittels der sie in den Einflussbereich einer Druckluftdüse 56 bewegt werden. Diese kann die Objekte 51a, 51b abhängig von der ermittelten Eigenschaft, also abhängig von dem Vorhandensein von Lufteinschlüssen, unterschiedlichen Fraktionen zuführen.

Auch das in Figur 5 gezeigte Beispiel kann vorteilhaft mittels Maschinenlernen realisiert werden. Zum Einlernen des Systems können dabei Bilddaten mit Referenzkörpern, d.h. mit Formteilen mit und ohne Lufteinschlüssen aufgenommen werden, wobei bekannt ist, welche der Formteile Lufteinschlüsse haben und welche nicht. Es können dann die Observablen, die die Ablenkung während der Flugphase beschreiben, aufgenommen werden. Mit dieser Datenbasis kann der Klassifikator trainiert werden. Die Abläufe bezüglich der Bildverarbeitung und des Trackings entsprechen dabei vorteilhaft denen der vorherigen Beispiele. Die Objekte können dann wie in den vorherigen Beispielen mittels des angelernten neuronalen Netzes charakterisiert werden.

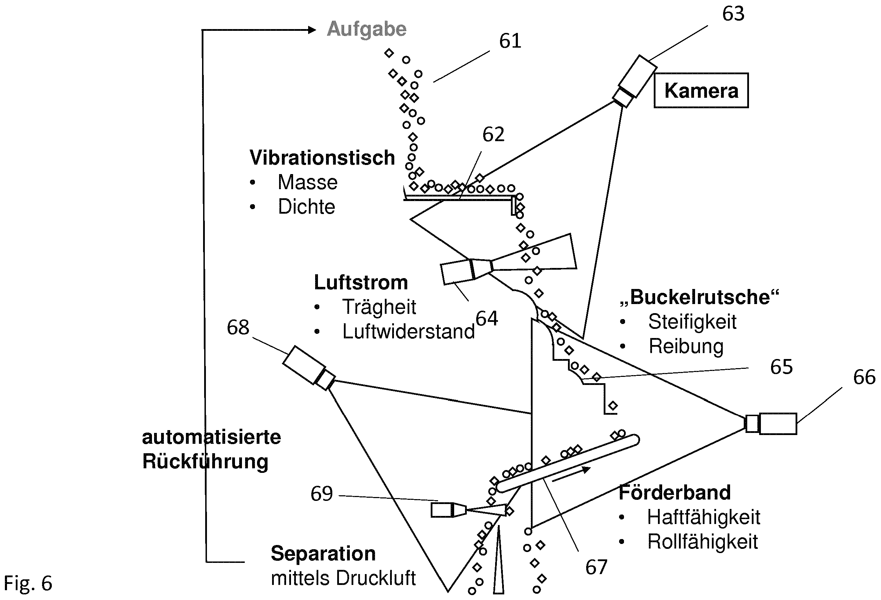

Figur 6 zeigt ein Beispiel eines erfindungsgemäßen Verfahrens, in dem mehrere mechanische Eigenschaften aus mehreren Wechselwirkungen bestimmt werden. Ein Schüttgutobjekt 61 wird dabei zunächst auf einen Vibrationstisch 62 aufgebracht, der die Objekte 61 einem freien Fall zuführt, der durch eine Kamera 63 beobachtet wird. Die Teilchen bewegen sich auf dem Vibrationstisch 63 unterschiedlich abhängig von ihrer Masse und ihrer Dichte. Durch Beobachtung mittels der Kamera 63 kann daher auf die Masse und die Dichte geschlossen werden. Im Bereich des freien Falls können die Objekte 61 mittels einer Luftdüse 64 mit einem Luftstrom beaufschlagt werden, auf dem die Teilchen 61 abhängig von ihrer Trägheit und ihrem Luftwiderstand unterschiedlich reagieren. Durch die Beobachtung im Bereich des Luftstroms der Düse 64 kann daher auf die Trägheit und den Luftwiderstand der Teilchen 61 geschlossen werden. Die Objekte 61 können dann einer Buckelrutsche 65 zugeführt werden. Im Bereich der Buckelrutsche können sie ebenfalls mittels der Kamera 63 und/oder mittels einer weiteren Kamera 66 beobachtet werden. Die Teilchen 61 bewegen sich auf der Buckelrutsche 65 unterschiedlich abhängig von ihrer Steifigkeit und Reibung.

Durch Beobachtung der Teilchen im Bereich der Buckelrutsche 65 mittels einer der Kameras oder beiden Kameras 63 und 66 kann daher auf die Steifigkeit und Reibung der Teilchen 61 geschlossen werden.

Die Teilchen 61 können dann auf ein Förderband 67 fallen, auf dem sie durch eine weitere Kamera 68 beobachtet werden. Auf dem Förderband bewegen sich die Teilchen abhängig von ihrer Haftfähigkeit und ihrer Rollfähigkeit. Aus der Beobachtung mittels der Kamera 68 auf dem Förderband 67 können die Teilchen daher auf ihre Haftfähigkeit und ihre Rollfähigkeit hin untersucht werden.

Abschließend können die Teilchen optional unterschiedlichen Fraktionen zugeführt werden. Dies kann beispielsweise mittels einer Luftdruckdüse 69 geschehen.

Im Folgenden soll eine beispielhafte Ausführung eines erfindungsgemäßen Verfahrens beschrieben werden. Dabei sollen die Objekte mittels eines Förderbands entlang der Bewegungsrichtung des Förderbandes bewegt werden. Jedes der Objekte wird dabei durch zumindest eine Kamera mehrmals beobachtet, um Daten zu erhalten, die zur Charakterisierung der Objekte verwendet werden können. Es kann beispielsweise eine Flächenkamera verwendet werden, die eine hinreichend hohe Bildwiederholungsrate hat.

Aus den durch die Kamera aufgenommenen Bilddaten können Positionen des Objektes, z.B. Schwerpunkte der 2D-Projektion bestimmt werden. Hieraus ergibt sich eine Menge von Punkten für jedes Bild. Durch Verwendung von Multi-Target-Tracking können Informationen über dasselbe Objekt in aufeinanderfolgenden Bildern in eine Trajektorie kombiniert werden. Es kann beispielsweise ein normaler Kalman-Filter zur Zustandsbestimmung verwendet werden, insbesondere zur Bestimmung der 2D-Position und der Geschwindigkeit in beide Richtungskomponenten als Zustandsvariablen. Auch ein Algorithmus zur Lösung des "Linear Assignment Problems" kann für die Zuordnung zwischen erhaltenen Messungen und existierenden Trajektorien verwendet werden. Eine detaillierte Beschreibung dieses Systems findet sich beispielsweise in
F. Pfaff, C. Pieper, G. Maier, B. Noack, H. Kruggel-Emden, R. Gruna, U.D. Hanebeck, S. Wirtz, V. Scherer, T. Längle et al., "Improving optical sorting of bulk materials using sophisticated motion models", tm-Technisches Messen, Vol. 83, No. 2, pp. 77-84, 2016
   und
F. Pfaff, M. Baum, B. Noack, U.D. Hanebeck, R. Gruna, T. Längle, and J. Beyerer, "TrackSort: Predictive tracking for sorting uncooperative bulk materials", in 2015 IEEE International Conference on Multisensor Fusion and Integration for Intelligent Systems (MFI), 2015, pp. 7-12.

Letztlich kann der Pfad jedes einzelnen Objektes daher durch eine Liste von Schwerpunktmessungen beschrieben werden. Diese können sich allerdings in ihrer Länge unterscheiden aufgrund von unterschiedlichen Anzahlen von Beobachtungszeitpunkten der Objekte.

In diesem Beispiel können einige bewegungsbezogene Werte basierend auf Geschwindigkeiten und Beschleunigungen manuell ausgewählt werden. Bezüglich der Geschwindigkeit können ein zeitlich globales und mehrere zeitlich lokale Merkmale betrachtet werden. In diesem Zusammenhang beziehen sich globale Merkmale auf Informationen, die über die gesamte Beobachtungssequenz des Objektes erhalten wurden. Lokale Merkmale können auf zwei aufeinanderfolgenden Messungen für geschwindigkeitsbezogene Merkmale und drei aufeinanderfolgende Messungen für beschleunigungsbezogene Merkmale basiert sein. Der sich letztlich ergebene Merkmalsvektor ist 14-dimensional und setzt sich aus den folgenden numerischen Werten zusammen: Der Anzahl von erhaltenen Messungen, der globalen Geschwindigkeit des Objektes, der lokalen minimalen, durchschnittlichen und maximalen Geschwindigkeit individuell für die X- und die Y-Komponente, und die lokale minimale, durchschnittliche und maximale Beschleunigung, individuell für die X- und Y-Komponente.

Es sei darauf hingewiesen, dass sich die lokalen Merkmale, die in der Mehrzahl sind, inline mit den Beobachtungen berechnen lassen, während die globalen Merkmale erfordern, dass festgestellt wird, dass das Objekt den beobachtbaren Bereich verlassen hat.

Der beschriebene Ansatz wurde experimentelle validiert. Für diesen Zweck wurden vier Produkte ausgewählt, für die ähnliche aber nicht gleiche Bewegungscharakteristiken zu erwarten sind. Derartige Produkte können beispielsweise hölzerne Halbkugeln, hölzerne Kugeln, Wachskugeln und Baumwollkügelchen sein. Diese Objekte hatten alle einen Durchmesser von 10 mm und unterschieden sich nur bezüglich der Oberflächenreibung und ihrer Gewichts. Zusätzlich zu den unterschiedlichen Materialien hatten die Wachskugeln und die Baumwollkügelchen ein kleines Loch durch sie hindurch. Die hölzernen Halbkugeln hatten eine Masse von ungefähr 0,26 g, die hölzernen Kugeln von ungefähr 0,4 g, die Wachskugeln eine Masse von ungefähr 0,47 g und die Baumwollkügelchen eine Masse von ungefähr 0,24 g.

Für diese Objekte wurden Bilddaten unter Verwendung eines miniaturisierten optischen Bandsortierers aufgezeichnet. Eine detaillierte Ausführung des Systems wird beschrieben in
C. Pieper, G. Maier, F. Pfaff, H. Kruggel-Emden, S. Wirtz, R. Gruna, B. Noack, V. Scherer, T. Längle, J. Beyerer et al., "Numerical modelling of an automated optical belt sorter using the discrete element method", Powder Technology, 2016.

Die Objekte wurden in das System mittels eines Vibrationszuführers eingebracht und rutschten dann eine Schräge hinunter zu einem Förderband, das sich mit einer Geschwindigkeit von 1,1 m/s bewegte. Die Bilder wurden mit einer Frequenz von ungefähr 192 Hz mit einer Kamera des Typs "Bonito CL-400" aufgenommen. Das Förderband hatte eine Gesamtlänge von 60 cm. Ein wichtiger Parameter für die Flusskontrolle ist die Länge des Förderbandes. Es wurden daher unterschiedliche Längen imitiert, indem die Kamera an unterschiedlichen Positionen entlang des Förderbandes an festen Abständen angebracht wurde. Es wurden Daten für drei Orte aufgenommen, die im Folgenden beschrieben werden. Der erste Abschnitt, der hier als Zuführung bezeichnet werden soll, ist direkt hinter jenem Ort angeordnet, wo die Objekte auf das Förderband gelangen und umfasste die ersten ca. 11 cm. Dieser Ort der Kamera simulierte also die kürzeste Länge des Förderbandes. Der zweite Abschnitt ist in der Mitte des Förderbandes angeordnet und deckt einen Bereich von ca. 23 cm - 34 cm ab und soll hier als Zentrum beschrieben werden. Der letzte Bereich deckte die letzten ca. 8 cm des Förderbandes ab und soll hier als Kante beschrieben werden.

Jeder der folgenden Verarbeitungsschritte wurde offline im Anschluss an die Bildaufzeichnung ausgeführt. Zuerst wurden grundlegende Bildverarbeitungsroutinen verwendet, um Mittelpunkte von potenziell in jedem Frame enthaltenen Objekten zu extrahieren. Hier wurde ausgenutzt, dass in der Szene ein stabiler Hintergrund und eine stabile Ausleuchtung existierten. Ein Hintergrund-Substraktionsansatz wurde verwendet, um Bereiche des Frames zu extrahieren, die Objekte enthalten. Es wurden dann deren Mittelpunkte berechnet. Diese Schwerpunktinformation wurde dann dem Multi-Target-Tracking-System zugeführt, das eine Liste von Tracks und zugeordnete Messungen für jeden Datensatz ausgibt. Aus diesen Daten konnten dann die oben beschriebenen Merkmalsvektoren berechnet werden.

Da hier manuelle Merkmalsselektion ausgeführt wurde, wurde Principle Component Analysis (PCA) verwendet, um die Auswahl zu validieren. Es konnten Cluster für alle vier der Klassen identifiziert werden.

Um den Erfolg des Verfahrens zu zeigen, wurde ein Random-Forrest-Classifier mit 10 Estimatoren auf die Daten angelernt. Als ein Maß für die Qualität wurde der Matthews Correlation Coefficient (MCC) wie in B.W. Matthews, "Comparison ofthe predicted and observed secondary structure of T4 phage lysozyme," Biochimica et Biophysica Acta (BBA)-Protein Structure, Vol. 405, No. 2, pp. 442-451, 1975 beschrieben, verwendet. Zunächst wurden die gesamten Daten verwendet, sowohl zum Training als auch zum Testen, um eine obere Grenze der Performance zu erhalten. Für alle Beobachtungsbereiche und Klassen wurde exzellente Werte zwischen 0,98 und 1,0 erhalten. Hier ist deutlich zu erkennen, dass Klassen aufgrund der Daten unterschieden werden können.

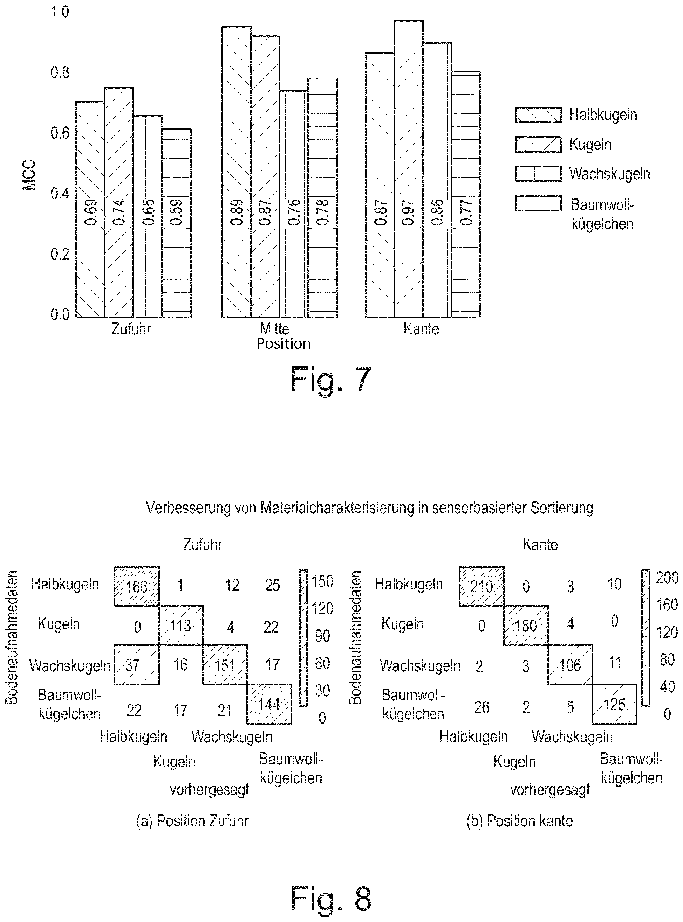

Darüber hinaus wurde Training und Testen mittels Cross-Validation ausgeführt. Für diesen Zweck wurden 60% der Daten zum Training verwendet. Die hierdurch erhaltenen Ergebnisse sind in Figur 7(b) gezeigt. Es ist zu erkennen, dass im Allgemeinen die Holzkugeln und Halbkugeln mit größter Genauigkeit für alle betrachteten Kamerapositionen detektiert werden konnten. Es ist auch zu erkennen, dass sich die Klassifizierungsqualität mit der Länge des Förderbandes verbessert. Es zeigt sich, dass bewegungsbasierte Merkmale zur Unterscheidung von Produkten aussagekräftig sind. Eine optionale Kombination mit weiteren Merkmalen wie beispielsweise farbbasierten Merkmalen oder geometrischen Merkmalen kann die Ergebnisse weiter verbessern.

Figur 8 zeigt, welche Fehler sich in der Klassifizierung ergaben. Es kann beispielsweise in den in Figur 8 gezeigten Wahrheitsmatrizen erkannt werden, dass in der Position "Zuführung" viele Wachskugeln fälschlicherweise als hölzerne Halbkugeln klassifiziert wurden, während dieser Fehler in der Position "Kante" fast vollständig verschwindet. Andererseits ist zu erkennen, dass die Zahl der fälschlicherweise als hölzerne Halbkugeln erkannten Baumwollkügelchen an beiden Positionen fast gleich ist.

Die Erfindung zeigt, dass bewegungsbasierte Merkmale gut geeignet sind, bestimmte Produkte im sensorbasierten Sortieren zu unterscheiden. Für weitere Verbesserung können beispielsweise auch Änderungen in Richtung und Drehimpuls verwendet werden.

## Patentansprüche

1. Verfahren zum Bestimmen zumindest einer mechanischen Eigenschaft zumindest eines Objektes (21, 33, 51a, 51b, 61),
wobei das zumindest eine Objekt (21, 33, 51a, 51b, 61) zumindest einer Wechselwirkung (1) unterworfen wird, die einen Bewegungszustand des zumindest einen Objektes (21, 33, 51a, 51b, 61) beeinflusst, wobei die zumindest eine Wechselwirkung (1) so gewählt ist, dass der durch die Wechselwirkung (1) bewirkte Bewegungszustand eine Funktion der zumindest einen mechanischen Eigenschaft ist,
wobei das zumindest eine Objekt (21, 33, 51a, 51b, 61) mit zumindest einer Kamera beobachtet wird,
wobei aus von der zumindest einen Kamera (32a, 32b, 44a, 44b, 55, 63, 66, 68) aufgenommenen Bildern der Bewegungszustand bestimmt wird
und wobei aus dem so bestimmten Bewegungszustand die zumindest eine mechanische Eigenschaft des zumindest einen Objektes (21, 33, 51a, 51b, 61) bestimmt wird.

2. Verfahren nach dem vorhergehenden Anspruch, wobei zumindest eine Wechselwirkung mit dem Objekt (21, 33, 51a, 51b, 61) erzeugt wird, die eine Änderung eines Bewegungszustandes des zumindest einen Objektes (21, 33, 51a, 51b, 61) bewirkt.

3. Verfahren nach einem der vorhergehenden Ansprüche, wobei als Bewegungszustand des zumindest einen Objektes (21, 33, 51a, 51b, 61) zumindest einen Ort, zumindest eine Trajektorie, zumindest eine Geschwindigkeit, zumindest eine Rotation und/oder zumindest eine Beschleunigung des entsprechenden Objektes (21, 33, 51a, 51b, 61) bestimmt wird.

4. Verfahren nach einem der vorhergehenden Ansprüche, wobei das zumindest eine Objekt (21, 33, 51a, 51b, 61) mehrmals zu unterschiedlichen Zeiten von der zumindest einen Kamera (32a, 32b, 44a, 44b, 55, 63, 66, 68) aufgenommen wird.

5. Verfahren nach einem der vorhergehenden Ansprüche,
wobei das zumindest eine Objekt (21, 33, 51a, 51b, 61) mit zumindest zwei Kameras (32a, 32b, 44a, 44b, 55, 63, 66, 68) aus unterschiedlichen Richtungen aufgenommen wird und/oder mit einer ersten Kamera zu einem ersten Zeitpunkt und mit einer zweiten Kamera zu einem zweiten, vom ersten verschiedenen, Zeitpunkt aufgenommen wird.

6. Verfahren nach einem der vorhergehenden Ansprüche, wobei für das zumindest eine Objekt (21, 33, 51a, 51b, 61) jeweils der Bewegungszustand bestimmt wird als eine Menge enthaltend eines oder mehrere ausgewählt aus:
einer Anzahl von aus den Bildern ermittelten Werten, einer Durchschnittsgeschwindigkeit des jeweiligen Objektes, gemittelt über eine maximale Zeitdauer, die das Objekt in den aufgenommenen Bildern sichtbar ist,
einer minimalen Geschwindigkeit in der Zeitdauer, die das jeweilige Objekt in den aufgenommenen Bildern sichtbar ist,
einer maximalen Geschwindigkeit in der Zeitdauer, die das jeweilige Objekt in den aufgenommenen Bildern sichtbar ist, und/oder einer Durchschnittsgeschwindigkeit über einen Teil des Zeitraumes, in dem das jeweilige Objekt in den aufgenommenen Bildern sichtbar ist,
einer Durchschnittsbeschleunigung des jeweiligen Objektes, gemittelt über eine maximale Zeitdauer, die das Objekt in den aufgenommenen Bildern sichtbar ist,
einer minimale Beschleunigung in der Zeitdauer, die das jeweilige Objekt in den aufgenommenen Bildern sichtbar ist,
einer maximale Beschleunigung in der Zeitdauer, die das jeweilige Objekt in den aufgenommenen Bildern sichtbar ist, und/oder einer Durchschnittsbeschleunigung über einen Teil des Zeitraumes, in dem das jeweilige Objekt in den aufgenommenen Bildern sichtbar ist.

7. Verfahren nach einem der vorhergehenden Ansprüche,
wobei die Wechselwirkung eine Beaufschlagung mit Vibration, mit zumindest einem Stoß, eine Wechselwirkung mit einer Berührungsfläche und/oder eine Wechselwirkung mit einem Luftstrom ist oder umfasst.

8. Verfahren nach einem der vorhergehenden Ansprüche,
wobei das zumindest eine Objekt (21, 33, 51a, 51b, 61) zum Unterwerfen mit der zumindest einen Wechselwirkung mit einem Rütteltisch gerüttelt wird, auf einer Rutsche oder einer Buckelrutsche (65) oder einer sandgestrahlten, gebürsteten oder beschichteten Rutsche rutscht und/oder mit einem Förderband (52) bewegt wird.

9. Verfahren nach einem der vorhergehenden Ansprüche,
wobei die zumindest eine mechanische Eigenschaft eine Trägheit, eine Masse, eine Dichte, eine Reibung mit einem umgebenden Medium, eine Rollfähigkeit, eine Haftfähigkeit, eine Steifigkeit, ein Elastizitätsmodul, eine Stoßzahl und/oder einen Strömungswiderstand des Objekts (21, 33, 51a, 51b, 61) umfasst.

10. Verfahren nach einem der vorhergehenden Ansprüche, wobei die Bilder zur Bestimmung der Bewegung einer Bildverarbeitung, einer Bildkorrektur, einer Segmentierung, einer Lokalisierung und/oder einer Merkmalsberechnung unterworfen werden.

11. Verfahren nach einem der vorhergehenden Ansprüche, wobei zumindest eine mechanische Eigenschaft von einer Vielzahl von Objekten (21, 33, 51a, 51b, 61) gemeinsam bestimmt wird.

12. Verfahren nach einem der vorhergehenden Ansprüche, wobei zumindest einige der zumindest einen Objekte (21, 33, 51a, 51b, 61) in unterschiedlichen der Bilder identifiziert und verfolgt werden, wobei vorzugsweise das Verfolgen mittels Multiobject Trackings und/oder mittels Extended Object Trackings erfolgt.

13. Verfahren nach einem der vorhergehenden Ansprüche, wobei die Bewegung aus den von der zumindest einen Kamera (32a, 32b, 44a, 44b, 55, 63, 66, 68) aufgenommenen Bildern mittels eines neuronalen Netzes ermittelt wird,
wobei zunächst das neuronales Netz mit einer Menge an Objekten (21, 33, 51a, 51b, 61) mit bekannten Eigenschaften angelernt wird, und anschließend die zumindest eine Eigenschaft der in den Bildern detektieren Objekte mittels des neuronalen Netzes bestimmt wird.

14. Verfahren nach einem der beiden vorhergehenden Ansprüche, wobei die Bewegung der Objekte (21, 33, 51a, 51b, 61) durch eine Liste von Schwerpunktmessungen beschrieben wird.

15. Verfahren nach einem der Ansprüche 11 bis 14, wobei die Objekte anhand der zumindest einen mechanischen Eigenschaft klassifiziert werden.

16. Verfahren nach einem der vorhergehenden Ansprüche, wobei zusätzlich zumindest eine geometrische Eigenschaft des Objektes (21, 33, 51a, 51b, 61) bestimmt wird.

17. Verfahren nach einem der vorhergehenden Ansprüche,
wobei das Verfahren ein Verfahren zum Messen und/oder Klassifizieren in einer industriellen Prüfung und/oder Inspektion ist oder wobei das Verfahren ein Verfahren zur Schüttgutsortierung und/oder zu Stückgutprüfung ist.

18. Vorrichtung zur Bestimmung zumindest einer mechanischen Eigenschaft zumindest eines Objektes (21, 33, 51a, 51b, 61), aufweisend zumindest eine Wechselwirkungsvorrichtung zum unterwerfen des zumindest einen Objektes mit einer Wechselwirkung, die einen Bewegungszustand des Objektes beeinflusst,
zumindest einer Kamera (32a, 32b, 44a, 44b, 55, 63, 66, 68), mit der das Objekt beobachtbar ist und
zumindest einer Auswerteeinheit, mit der aus von der Kamera aufgenommenen Bildern die zumindest eine mechanische Eigenschaft des zumindest einen Objektes bestimmbar ist,
wobei mit der Vorrichtung ein Verfahren nach einem der vorhergehenden Ansprüche ausführbar ist.

## Claims

1. A method for determining at least one mechanical property of at least one object (21, 33, 51a, 51b, 61),
wherein the at least one object (21, 33, 51a, 51b, 61) is subjected to at least one interaction (1) which influences a motion state of the at least one object (21, 33, 51a, 51b, 61), wherein the at least one interaction (1) is selected such that the motion state caused by the interaction (1) is a function of the at least one mechanical property,
wherein the at least one object (21, 33, 51a, 51b, 61) is observed by at least one camera,
wherein the motion state is determined from the images captured by the at least one camera (32a, 32b, 44a, 44b, 55, 63, 66, 68),
and wherein the at least one mechanical property of the at least one object (21, 33, 51a, 51b, 61) is determined from the motion state thus determined.

2. The method according to the preceding claim, wherein at least one interaction with the object (21, 33, 51a, 51b, 61) is generated which causes a change in a motion state of the at least one object (21, 33, 51a, 51b, 61).

3. The method according to any of the preceding claims, wherein at least one location, at least one trajectory, at least one speed, at least one rotation, and/or at least one acceleration of the corresponding object (21, 33, 51a, 51b, 61) is determined as the motion state of the at least one object (21, 33, 51a, 51b, 61).

4. The method according to any of the preceding claims, wherein the at least one object (21, 33, 51a, 51b, 61) is captured repeatedly at different times by the at least one camera (32a, 32b, 44a, 44b, 55, 63, 66, 68).

5. The method according to any of the preceding claims,
wherein the at least one object (21, 33, 51a, 51b, 61) is captured from different directions using at least two cameras (32a, 32b, 44a, 44b, 55, 63, 66, 68) and/or is captured using a first camera at a first point in time and using a second camera at a second point in time that is different from the first.

6. The method according to any of the preceding claims, wherein for the at least one object (21, 33, 51a, 51b, 61), the motion state is determined in each case as a set containing one or more of the following selected from:
a number of values ascertained from the images, an average speed of the relevant object, averaged over a maximum duration for which the object is visible in the captured images,
a minimum speed in the duration for which the relevant object is visible in the captured images,
a maximum speed in the duration for which the relevant object is visible in the captured images, and/or
an average speed over a portion of the time period in which the relevant object is visible in the captured images, an average acceleration of the relevant object, averaged over a maximum duration for which the object is visible in the captured images,
a minimum acceleration in the duration for which the relevant object is visible in the captured images,
a maximum acceleration in the duration for which the relevant object is visible in the captured images, and/or
an average acceleration over a portion of the time period in which the relevant object is visible in the captured images.

7. The method according to any of the preceding claims,
wherein the interaction is or comprises an application of vibration, of at least one impact, an interaction with a contact surface, and/or an interaction with an air flow.

8. The method according to any of the preceding claims,
wherein, for being subjected to the at least one interaction, the at least one object (21, 33, 51a, 51b, 61) is vibrated using a vibrating table, is slid on a slide or a stepped slide (65) or a sandblasted, brushed, or coated slide, and/or is moved using a conveyor belt (52).

9. The method according to any of the preceding claims,
wherein the at least one mechanical property comprises an inertia, a mass, a density, friction against a surrounding medium, a rolling capacity, an adhesion, a stiffness, a modulus of elasticity, a coefficient of reconstitution, and/or a flow resistance of the object (21, 33, 51a, 51b, 61).

10. The method according to any of the preceding claims, wherein the images are subjected to image processing, image correction, segmentation, localization, and/or feature computation in order to determine the motion.

11. The method according to any of the preceding claims, wherein at least one mechanical property of a plurality of objects (21, 33, 51a, 51b, 61) is determined jointly.

12. The method according to any of the preceding claims, wherein at least some of the at least one objects (21, 33, 51a, 51b, 61) are identified and tracked in different images, wherein the tracking is preferably performed by means of multi-object tracking and/or extended object tracking.

13. The method according to any of the preceding claims, wherein the motion is determined from the images captured by the at least one camera (32a, 32b, 44a, 44b, 55, 63, 66, 68) by means of a neural network,
wherein the neural network is first trained with a set of objects (21, 33, 51a, 51b, 61) having known properties, and the at least one property of the objects detected in the images is then determined by means of the neural network.

14. The method according to any of the two preceding claims, wherein the motion of the objects (21, 33, 51a, 51b, 61) is described by a list of center-of-gravity measurements.

15. The method according to any of claims 11 to 14, wherein the objects are classified on the basis of the at least one mechanical property.

16. The method according to any of the preceding claims, wherein at least one geometric property of the object (21, 33, 51a, 51b, 61) is additionally determined.

17. The method according to any of the preceding claims,
wherein the method is a method for measurement and/or classification in an industrial testing and/or inspection or wherein the method is a method for bulk material sorting and/or bulk material testing.

18. The device for determining at least one mechanical property of at least one object (21, 33, 51a, 51b, 61), comprising at least one interaction device for subjecting the at least one object to an interaction which influences a motion state of the object,
at least one camera (32a, 32b, 44a, 44b, 55, 63, 66, 68), using which the object can be observed, and
at least one analysis unit, using which the at least one mechanical property of the at least one object can be determined from images captured by the camera,
wherein a method according to any of the preceding claims can be performed using the device.

## Revendications

1. Procédé de détermination d'au moins une propriété mécanique d'au moins un objet (21, 33, 51a, 51b, 61),
dans lequel le au moins un objet (21, 33, 51a, 51b, 61) est soumis à au moins une interaction (1) qui influence un état de mouvement du au moins un objet (21, 33, 51a, 51b, 61), dans lequel la au moins une interaction (1) est choisie de telle sorte que l'état de mouvement provoqué par l'interaction (1) est une fonction de la au moins une propriété mécanique,
dans lequel le au moins un objet (21, 33, 51a, 51b, 61) est observé avec au moins une caméra,
dans lequel l'état de mouvement est déterminé à partir d'images prises par la au moins une caméra (32a, 32b, 44a, 44b, 55, 63, 66, 68)
et dans lequel la au moins une propriété mécanique de l'au moins un objet (21, 33, 51a, 51b, 61) est déterminée à partir de l'état de mouvement ainsi déterminé.

2. Procédé selon la revendication précédente, dans lequel au moins une interaction avec l'objet (21, 33, 51a, 51b, 61) est générée, qui provoque un changement d'un état de mouvement du au moins un objet (21, 33, 51a, 51b, 61).

3. Procédé selon l'une quelconque des revendications précédentes, dans lequel au moins un lieu, au moins une trajectoire, au moins une vitesse, au moins une rotation et/ou au moins une accélération de l'objet (21, 33, 51a, 51b, 61) correspondant est déterminé(e) comme état de mouvement de l'au moins un objet (21, 33, 51a, 51b, 61).

4. Procédé selon l'une quelconque des revendications précédentes, dans lequel le au moins un objet (21, 33, 51a, 51b, 61) est photographié plusieurs fois à des moments différents par la au moins une caméra (32a, 32b, 44a, 44b, 55, 63, 66, 68).

5. Procédé selon l'une quelconque des revendications précédentes,
dans lequel le au moins un objet (21, 33, 51a, 51b, 61) est photographié avec au moins deux caméras (32a, 32b, 44a, 44b, 55, 63, 66, 68) depuis des directions différentes et/ou est photographié avec une première caméra à un premier moment et avec une seconde caméra à un second moment différent du premier.

6. Procédé selon l'une quelconque des revendications précédentes, dans lequel, pour le au moins un objet (21, 33, 51a, 51b, 61), respectivement l'état de mouvement est déterminé comme un ensemble contenant un ou plusieurs choisis parmi :
un nombre de valeurs établies à partir des images, une vitesse moyenne de l'objet respectif, moyennée sur une durée maximale pendant laquelle l'objet est visible dans les images prises,
une vitesse minimale pendant la durée pendant laquelle l'objet respectif est visible dans les images prises,
une vitesse maximale pendant la durée pendant laquelle l'objet respectif est visible dans les images prises, et/ou
une vitesse moyenne sur une partie de la période pendant laquelle l'objet respectif est visible dans les images prises, une accélération moyenne de l'objet respectif, moyennée sur une durée maximale pendant laquelle l'objet est visible dans les images prises,
une accélération minimale pendant la durée pendant laquelle l'objet respectif est visible dans les images prises,
une accélération maximale pendant la durée pendant laquelle l'objet respectif est visible dans les images prises, et/ou
une accélération moyenne sur une partie de la période pendant laquelle l'objet respectif est visible dans les images prises.

7. Procédé selon l'une quelconque des revendications précédentes,
dans lequel l'interaction est ou comprend une exposition à une vibration, à au moins un choc, une interaction avec une surface de contact et/ou une interaction avec un flux d'air.

8. Procédé selon l'une quelconque des revendications précédentes,
dans lequel le au moins un objet (21, 33, 51a, 51b, 61) est secoué pour être soumis à la au moins une interaction avec une table vibrante, glisse sur un toboggan ou un toboggan à bosses (65) ou un toboggan sablé, brossé ou revêtu et/ou est déplacé avec une bande transporteuse (52).

9. Procédé selon l'une quelconque des revendications précédentes,
dans lequel au moins une propriété mécanique comprend une inertie, une masse, une densité, une friction avec un milieu environnant, une aptitude au roulement, une adhérence, une rigidité, un module d'élasticité, un nombre de chocs et/ou une résistance à l'écoulement de l'objet (21, 33, 51a, 51b, 61).

10. Procédé selon l'une quelconque des revendications précédentes, dans lequel les images sont soumises à un traitement d'image, à une correction d'image, à une segmentation, à une localisation et/ou à un calcul de caractéristiques pour déterminer le mouvement.

11. Procédé selon l'une quelconque des revendications précédentes, dans lequel au moins une propriété mécanique d'une pluralité d'objets (21, 33, 51a, 51b, 61) est déterminée en commun.

12. Procédé selon l'une quelconque des revendications précédentes, dans lequel au moins certains des au moins un objet (21, 33, 51a, 51b, 61) sont identifiés et suivis dans différentes des images, dans lequel le suivi s'effectue de préférence au moyen de suivis multi-objets et/ou au moyen de suivis d'objets étendus.

13. Procédé selon l'une quelconque des revendications précédentes, dans lequel le mouvement est établi à partir des images prises par la au moins une caméra (32a, 32b, 44a, 44b, 55, 63, 66, 68) au moyen d'un réseau neuronal,
dans lequel le réseau neuronal est d'abord entraîné avec un ensemble d'objets (21, 33, 51a, 51b, 61) avec des propriétés connues, et ensuite la au moins une propriété des objets détectés dans les images est déterminée au moyen du réseau neuronal.

14. Procédé selon l'une des deux revendications précédentes, dans lequel le mouvement des objets (21, 33, 51a, 51b, 61) est décrit par une liste de mesures de centre de gravité.

15. Procédé selon l'une quelconque des revendications 11 à 14, dans lequel les objets sont classés sur la base de la au moins une propriété mécanique.

16. Procédé selon l'une quelconque des revendications précédentes, dans lequel au moins une propriété géométrique de l'objet (21, 33, 51a, 51b, 61) est déterminée en plus.

17. Procédé selon l'une quelconque des revendications précédentes,
dans lequel le procédé est un procédé de mesure et/ou de classification dans un test et/ou une inspection industrielle ou dans lequel le procédé est un procédé de triage de produits en vrac et/ou d'inspection de produits en vrac.

18. Dispositif de détermination d'au moins une propriété mécanique d'au moins un objet (21, 33, 51a, 51b, 61), présentant au moins un dispositif d'interaction pour soumettre le au moins un objet à une interaction qui influence un état de mouvement de l'objet,
au moins une caméra (32a, 32b, 44a, 44b, 55, 63, 66, 68), avec laquelle l'objet peut être observé et
au moins une unité d'évaluation, avec laquelle au moins une propriété mécanique de l'au moins un objet peut être déterminée à partir d'images prises par la caméra,
dans lequel un procédé selon l'une quelconque des revendications précédentes peut être mis en œuvre avec le dispositif.
